# EUROPÄISCHE PATENTANMELDUNG

(11) **EP 4 654 575 A1**
(43) Veröffentlichungstag der Anmeldung: **26.11.2025**
(21) Anmeldenummer: 25162929.1
(22) Anmeldetag: 11.03.2025
(51) Int. Cl.: H04N 7/18, G07C 5/08, H04N 17/00

(54) **WARTUNGSSYSTEM UND WARTUNGSVERFAHREN FÜR EIN INDIREKTES SICHTSYSTEM EINES FAHRZEUGS**

(30) Priorität: 22.05.2024 DE 102024114262
(71) Anmelder: MEKRA Lang GmbH & Co. KG, 91465 Ergersheim (DE)
(72) Erfinder: Vogelgesang, Marc-André, 90556 Cadolzburg (DE)
(74) Vertreter: Alpspitz IP

(57) **Zusammenfassung**

Ein Wartungssystem für ein indirektes Sichtsystem (2) eines Fahrzeugs (1), enthaltend: das indirekte Sichtsystem (2) enthaltend mindestens einer optischen Sensoreinheit (3) zum Erfassen von Bilddaten der Umgebung des Fahrzeugs, mindestens einer Verarbeitungseinheit (9) zum Verarbeiten der von der optischen Sensoreinheit (3) erfassten Bilddaten, und mindestens einer Wiedergabeeinheit (4), auf der die von der Verarbeitungseinheit (9) verarbeiteten Bilddaten angezeigt werden, wobei mindestens eine aus der mindestens einen optischen Sensoreinheit (3), der mindestens einen Verarbeitungseinheit (9) und der mindestens einen Wiedergabeeinheit (4) mindestens eine Teilkomponente (16, 17, 18, 19, 23, 24, 26) enthält. Das Wartungssystem enthält ferner eine Empfangseinheit (6) zum Empfangen von Daten; und eine Auswerteeinheit (10), die basierend auf den von der Empfangseinheit (6) empfangenen Daten ein Wartungssignal erzeugt, das angibt, wie lange und/oder ob die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.

## Beschreibung

Die vorliegende Erfindung betrifft ein Wartungssystem für ein indirektes Sichtsystem eines Fahrzeugs und ein Verfahren zum Warten eines derartigen indirekten Sichtsystems.

Bei Fahrzeugen, insbesondere Nutzfahrzeugen, wie beispielsweise Lastkraftwagen, gibt es Bereiche um das Fahrzeug herum, die von einer Fahrerposition aus nicht direkt eingesehen werden können. Solche Bereiche rund um das Fahrzeug sind beispielsweise bei einem Lastkraftwagen der Heckbereich oder seitlich neben dem Fahrzeug liegende Bereiche. Damit ein Fahrer andere Verkehrsteilnehmer bzw. Hindernisse, die in diesen Bereichen liegen, jederzeit erkennen kann, werden am Fahrzeug Einrichtungen zur indirekten Sicht vorgesehen, wie beispielsweise spiegelbasierte Systeme oder kamerabasierte Systeme, sogenannte Kamera-Monitor-Systeme.

Kamera-Monitor-Systeme für Kraftfahrzeuge sind bekannt, die eine Aufnahmeeinheit, eine Berechnungseinheit und eine Wiedergabeeinheit enthalten. Mittels der Aufnahmeeinheit, beispielsweise einer Kamera, wird ein Gebiet um ein Fahrzeug erfasst und das erfasste Bild gegebenenfalls nach Bearbeitung durch die Berechnungseinheit auf einer Wiedergabeeinheit im Fahrerraum des Fahrzeugs für den Fahrer einsehbar dargestellt. Derartige indirekte Sichtsysteme unterliegen gesetzlichen Vorschriften und müssen, da sie herkömmliche Spiegel in der Regel ersetzen, besonders ausfallsicher sein. Um eine derartige Ausfallsicherheit zu gewährleisten, wird bisher bei einem Ausfall des indirekten Sichtsystems das gesamte System ausgebaut und ersetzt, obwohl in der Regel nur eine Teilkomponente des indirekten Sichtsystems, beispielsweise die Aufnahmeeinheit, defekt ist. Ferner werden die ausgebauten Teile in der Regel verschrottet und nicht wiederverwertet, da deren Verschleiß bzw. die verbleibende vom Hersteller der Teilkomponente vorgegebene Lebensdauer nicht mit ausreichender Sicherheit festgestellt werden kann.

Ferner kann in einem Reklamationsfall nicht festgestellt werden, welche Komponenten des indirekten Sichtsystems gegebenenfalls wiederverwendet werden können bzw. nicht ersetzt werden müssen. Daher wird auch in einem Reklamationsfall in der Regel das gesamte System ausgebaut und ersetzt, was nicht nachhaltig ist.

Zudem soll eine möglichst hohe Ausfallsicherheit erreicht werden und möglichst bereits vor Erreichen der Lebensdauer Information bereitgestellt werden, wenn einzelne Komponenten des Sichtsystems ausgetauscht werden sollten, da sie kurz davor sind, ihre prognostizierte Lebensdauer zu erreichen, und damit die Gefahr besteht, dass das gesamte Sichtsystem bald ausfällt.

Aufgabe der vorliegenden Erfindung ist es obiges Problem zu lösen und die Nachhaltigkeit im Falle eines Reklamationsfalls bzw. bei einem Defekt des indirekten Sichtsystems zu verbessern, indem nur einzelne Komponenten des indirekten Sichtsystems ausgebaut werden oder ausgebaute Teile des indirekten Sichtsystems in anderen indirekten Sichtsystemen wieder verbaut werden. Hierzu muss jedoch festgestellt werden, wie lange und ob die einzelnen Komponenten des indirekten Sichtsystems noch verwendbar sind.

Obige Aufgabe wird durch ein Wartungssystem gemäß Anspruch 1 und ein Verfahren zum Warten eines indirekten Sichtsystems gemäß Anspruch 15 gelöst. Vorteilhafte Weiterbildungen der Erfindung sind in den Unteransprüchen angegeben.

Das Wartungssystem für ein indirektes Sichtsystem eines Fahrzeugs gemäß der vorliegenden Erfindung enthält das indirekte Sichtsystem, das mindestens eine optische Sensoreinheit zum Erfassen von Bilddaten der Umgebung des Fahrzeugs, mindestens eine Verarbeitungseinheit zum Verarbeiten der von der optischen Sensoreinheit erfassten Bilddaten, und mindestens eine Wiedergabeeinheit, auf der die von der Verarbeitungseinheit verarbeiteten Bilddaten angezeigt werden, aufweist. Die von der Wiedergabeeinheit angezeigten Bilddaten können auch ohne vorherige Verarbeitung durch die Verarbeitungseinheit auf der Wiedergabeeinheit angezeigt werden. Die Verarbeitungseinheit kann gemäß der Erfindung eine separate Einheit des indirekten Sichtsystems sein, oder kann Bestandteil der mindestens einen optischen Sensoreinheit und/oder der mindestens einen Wiedergabeeinheit sein, wodurch das indirekte Sichtsystem kompakter ausgebildet werden kann.

Das Wartungssystem gemäß der vorliegenden Erfindung kann ferner eine Empfangseinheit enthalten, die Daten empfängt und an eine Auswerteeinheit sendet, die basierend auf den empfangenen Daten ein Wartungssignal erzeugt. Gemäß der Erfindung kann die Empfangseinheit Teil der Auswerteeinheit, der Wiedergabeeinheit, und/oder der optischen Sensoreinheit sein, und/ oder als separates Bauteil ausgebildet sein. Dieses Wartungssignal gibt an, wie lange und/oder ob Teilkomponenten der optischen Sensoreinheit, der Verarbeitungseinheit und/oder der Wiedergabeeinheit noch verwendbar sind. Das Wartungssignal ist also ein Indikator für den Verschleiß der Teilkomponenten. Das Wartungssignal kann auch angeben, wie lange und/oder ob die optische Sensoreinheit, die Verarbeitungseinheit und/oder die Wiedergabeeinheit noch verwendbar sind. Das Wartungssignal kann auch angeben, wie lange und/oder ob das gesamte indirekte Sichtsystem noch verwendbar ist. Dadurch kann festgestellt werden, ob die optische Sensoreinheit, die Verarbeitungseinheit und/oder die Wiedergabeeinheit bzw. deren Teilkomponenten weiterverwendet werden können, also beispielsweise in einem anderen indirekten Sichtsystem wieder verbaut werden können. Mithilfe des Wartungssignals kann auch festgestellt werden, inwieweit die einzelnen Einheiten (die optische Sensoreinheit, die Verarbeitungseinheit und die Wiedergabeeinheit) des indirekten Sichtsystems und/oder deren Teilkomponenten verschlissen sind. Mittels des Wartungssignals ist es somit möglich festzustellen, ob einzelne Teilkomponenten wiederverwendet werden können, ob eine gesamte Einheit (optische Sensoreinheit, Verarbeitungseinheit, Wiedergabeeinheit) wiederverwendet werden kann, oder ob das gesamte indirekte Sichtsystem beispielsweise verschrottet werden muss.

Gemäß der Erfindung werden die von der Empfangseinheit empfangenen Daten von mindestens einem Fahrzeugsensor erfasst. Diese sind Fahrzeugdaten, die relevant sind für die Lebensdauer des Fahrzeugs, der mindestens einen Teilkomponente und/oder der mindestens einen aus der mindestens einen optischen Sensoreinheit, der mindestens einen Verarbeitungseinheit und der mindestens einen Wiedergabeeinheit. Für die Lebensdauer des Fahrzeugs bzw. der einzelnen Einheiten und deren Teilkomponenten des indirekten Sichtsystems relevante Daten können auch von einer Steuereinheit des Fahrzeugs bereitgestellt werden, die entsprechende Information über das Fahrzeug (Fahrzeugdaten) liefert. In diesem Fall kann die Steuereinheit selbst der Fahrzeugsensor sein oder ein separates Bauteil. Derartige fahrzeugrelevante Daten geben beispielsweise Information über gefahrene Kilometer des Fahrzeugs, gefahrene Kilometer des Fahrzeugs bei Betrieb einer jeweiligen Teilkomponente, Betriebsdauer des Fahrzeugs, Betriebsdauer einer jeweiligen Teilkomponente bei Betrieb des Fahrzeugs und/oder in Fahrzeugkomponenten aufgetretene Fehler. Derartige in Fahrzeugkomponenten aufgetretene Fehler können beispielsweise mittels interner Signale, wie von Sensoren erfasste Spannungswerte, Spannungssprünge, Spannungsspitzen, Schaltzyklen, etc. detektiert werden. Erfindungsgemäß können die von der Empfangseinheit empfangenen Daten interne Daten des indirekten Sichtsystems sein, wie beispielswiese in dem indirekten System aufgetretene Spannungsspitzen, Schaltzyklen, etc., und/oder externe Signale.

Das erfindungsgemäße Wartungssystem kann zusätzlich oder alternativ zu dem oben genannten Fahrzeugsensor mindestens einen weiteren Sensor aufweisen, der Umweltdaten an die Empfangseinheit sendet, die fahrzeugunabhängig sind und von externen Umweltfaktoren abhängen. Derartige Umweltdaten enthalten Information über beispielsweise Temperatur, Luftfeuchtigkeit, Luftdruck, UV-Belastung, Staub, Feinstaub und/oder mechanische Belastungen, denen eine Einheit des indirekten Sichtsystems bzw. deren Teilkomponente oder das gesamte indirekte Sichtsystem ausgesetzt sind.

Gemäß der vorliegenden Erfindung kann der mindestens eine weitere Sensor, der Umweltdaten ermittelt, die fahrzeugunabhängig sind und von Umweltfaktoren abhängen, in der mindestens einen optischen Sensoreinheit, mindestens einen Verarbeitungseinheit und/oder mindestens einen Wiedergabeeinheit und/oder in mindestens einer Teilkomponente dieser Einheiten enthalten sein. In dieser Weise ist es möglich, die oben genannten Umweltfaktoren direkt an den Einheiten bzw. deren Teilkomponenten zu messen, um deren voraussichtliche Lebensdauer vorauszusagen.

Der mindestens eine weitere Sensor kann alternativ auch als ein separates Bauteil am Fahrzeug angebracht sein und fahrzeugunabhängige Umweltdaten an die Empfangseinheit des Wartungssystems drahtlos oder drahtgebunden senden.

Gemäß der vorliegenden Erfindung kann die Auswerteeinheit des Wartungssystems ferner eine Berechnungseinheit aufweisen, die mindestens einen Teil der von der Empfangseinheit empfangenen Fahrzeugdaten und/oder Umweltdaten von dem mindestens einen Fahrzeugsensor und/oder dem mindestens einen weiteren Sensor einer Berechnungsfunktion unterzieht, um das Wartungssignal basierend auf dem berechneten Funktionswert zu erzeugen. Die zugrundliegende Berechnungsfunktion weist dabei mindestens einen Teil der empfangenen Fahrzeugdaten und/oder Umweltdaten als Funktionsparameter auf. Die Berechnungsfunktion kann gemäß der Erfindung als Berechnungsmatrix ausgebildet sein, deren Dimension durch die Anzahl der Umweltfaktoren gegeben ist, die eine gemeinsame Relation zueinander haben. Auf diese Weise ist es möglich, einzelne Daten (Fahrzeugdaten und/oder Umweltdaten), die für einzelne Einheiten bzw. deren Teilkomponenten des indirekten Sichtsystems funktionsrelevant sind mehr Bedeutung zuzuordnen als anderen Daten, bei gleichzeitiger Berücksichtigung von mehreren verschiedenen Umweltdaten (Umweltfaktoren). Die Daten, denen mehr Bedeutung zugeordnet wird, haben mehr Auswirkung auf die Länge der Lebensdauer. Verschiedene Werte der Umweltfaktoren sind ein Indikator für den Verschleiß einer entsprechenden Komponente.

Teilkomponenten der optischen Sensoreinheit, die jeweils der Überwachung unterliegen können, sind beispielsweise das Kameragehäuse, der Kameraflügel mit Trägerstruktur, ein optischer Bildsensor (auf einer Platine), eine Verarbeitungsplatine, eine Platine mit Netzteil, Spannungsregler, gegebenenfalls Speicherbausteinen, Prozessoren, Widerständen, Übertagungschips, usw., ein optisches Linsensystem, eine Linseneinheit und Dichtungen. Teilkomponenten der Wiedergabeeinheit, die jeweils der Überwachung unterliegen können, sind beispielsweise ein Monitor mit Platine mit Spannungsregler, Netzteil, Speicherbausteinen, Prozessoren, Widerständen, usw., eine Monitorhalterung zur mechanischen Fixierung des Monitors an dem Fahrzeug, Dichtungen, Gehäuse, und dergleichen. Teilkomponenten der Verarbeitungseinheit, die jeweils der Überwachung unterliegen können, sind beispielsweise eine oder mehrere Platinen mit Netzteil, Spannungsregler, FPGA oder anderen Prozessoren, Mikrocontrollern, Speicherbausteinen, Widerständen, Pegelwandlern, Übertragungschips, CAN-Controllern, etc. Die vorangegangenen Aufzählungen der Teilkomponenten der optischen Sensoreinheit, der Wiedergabeeinheit und der Verarbeitungseinheit sind lediglich beispielhaft und nicht abschließend.

Durch das Verwenden der obigen Berechnungsfunktion (Berechnungsmatrix) ist es möglich, einzelnen Daten gegenüber anderen Daten mehr Priorität zuzuweisen. Einzelne Daten können einen anderen Einfluss auf unterschiedliche Komponenten haben bzw. können die Daten einen wechselseitigen kombinierten Einfluss habe. So ist beispielsweise der Information über Luftfeuchtigkeit und Temperatur, die in der optischen Sensoreinheit gemessen werden, mehr Priorität zuzuordnen als beispielsweise dem Luftdruck oder der UV-Belastung der optischen Sensoreinheit, da niedergeschlagenes Wasser bei Temperaturwechsel oder kalten Oberflächen Probleme verursacht, insbesondere für den optischen Bildsensor der optischen Einheit. Niederschlag, wie beispielsweise Regen, Schnee, Eis, Hagel kann zu Korrosionsschäden führen, die insbesondere Teilkomponenten der optischen Sensoreinheit betreffen, wie den Bildsensor, elektronische Bauteile, Platinen, Lötstellen, und generell elektronisch leitende Komponenten und Bauteile. Luftfeuchtigkeit ist für die optische Sensoreinheit problematisch, da niedergeschlagenes Wasser bei Temperaturwechsel oder kalten Oberflächen Probleme darstellt. Staub in der optischen Sensoreinheit führt zu Problemen, die Teilkomponenten betreffen wie Dichtungen, die Linsenoberfläche, den Abklappmechanismus, den Rastmechanismus der optischen Sensoreinheit mit einem Kameraflügel an der Außenseite eines Fahrzeugs. In Abhängigkeit von einer speziellen Teilkomponente wird gemäß der vorliegenden Erfindung eine entsprechende Berechnungsfunktion (Berechnungsmatrix) verwendet, um das Wartungssignal für diese Teilkomponente zu ermitteln, die entsprechende Umweltdaten, die für diese Teilkomponente relevant sind, bzw. besonders relevant sind, als Funktionsparameter bzw. Matrixeinträge aufweist. Die Matrixeinträge der Berechnungsmatrix stellen dabei ein Maß für die Reduktion der Lebensdauer dar. Wie oben erwähnt, werden durch die Berechnungsfunktion bzw. Berechnungsmatrix bestimmte Fahrzeugdaten und/oder bestimmte Umweltdaten (Umweltfaktoren), die für den Verschleiß eine entsprechende Teilkomponente relevanter sind, bei der Berechnung bzw. Ermittlung des Wartungssignals, höher priorisiert als andere Daten. Für verschiedene Teilkomponenten, für die optische Sensoreinheit, die Verarbeitungseinheit und/oder die Wiedergabeeinheit können verschiedene Berechnungsfunktionen bzw. Berechnungsmatrizen verwendet werden, die den unterschiedlichen Einfluss der Fahrzeugdaten und/oder der Umweltdaten auf die jeweiligen Teilkomponenten bzw. Einheiten widerspiegeln.

Gemäß der vorliegenden Erfindung können mehrere Wartungssignale berechnet und verwendet werden. Die Wartungssignale können miteinander kombiniert werden, wobei ein resultierendes Wartungssignal (Gesamtwartungssignal) angibt, wie lange mindestens eine Teilkomponente, mindestens eine aus der mindestens einen optischen Sensoreinheit, der mindestens einen Verarbeitungseinheit und der mindestens einen Wiedergabeeinheit, und/oder das gesamte indirekte Sichtsystem noch verwendbar ist. Durch das Kombinieren mehrerer Wartungssignale ist es möglich, die Lebensdauer beispielsweise des gesamten indirekten Sichtsystems zuverlässiger vorherzusagen, da die voraussichtliche Lebensdauer der einzelnen Einheiten (optische Sensoreinheit, Verarbeitungseinheit, Wiedergabeeinheit) und deren Teilkomponenten berücksichtigt wird.

Gemäß der vorliegenden Erfindung kann die Auswerteeinheit einen Zähler und eine Vergleichseinheit enthalten, wobei die von der Empfangseinheit empfangenen Daten und/oder berechneten Daten, die der Berechnungsfunktion bzw. Berechnungsmatrix unterzogen worden sind, mit einem vorgegebenen Schwellenwert verglichen werden und der Zähler sich erhöht, wenn der Schwellenwert überschritten wird. Beispielsweise kann sich ein Temperaturzähler jedes Mal erhöhen, wenn eine vorgegebene Temperatur von 30 Grad überschritten wird. Der Zählwert gibt somit an, wie oft eine Einheit bzw. Teilkomponente des indirekten Sichtsystems einer hohen Temperatur ausgesetzt worden ist, was wiederum Rückschlüsse über eine voraussichtliche Lebensdauer der entsprechenden Einheit bzw. Teilkomponente des indirekten Sichtsystems erlaubt. Das von der Auswerteeinheit ausgegebene Wartungssignal, das auf dem Wert des Zählers basiert, gibt somit an, wie oft beispielsweise eine kritische Temperatur überschritten worden ist. Die kritische Temperatur (der Schwellenwert) kann beispielsweise von dem Hersteller der Einheit bzw. Teilkomponente des indirekten Sichtsystems vorgegeben sein, oder kann empirisch festgelegt werden und sich mit der Zeit ändern. Eine Anpassung des Schwellenwerts beispielsweise über ein Softwareupdate erfolgen. Alternativ kann gemäß der Erfindung das Wartungssignal beispielsweise auch basierend auf Sensorwerten bestimmt werden, die über ein vordefiniertes Zeitintervall abgespeichert werden, wobei über alle abgespeicherten Sensorwerte ein Mittelwert gebildet wird und der Mittelwert mit dem vorbestimmten Schwellenwert verglichen wird.

Gemäß der vorliegenden Erfindung kann die Auswerteeinheit das erzeugte Wartungssignal an die Wiedergabeeinheit, an ein externes Diagnosegerät und/oder an eine Cloud senden. Gemäß der Erfindung kann die Auswerteeinheit selbst in einem Fahrzeug, dem externen Diagnosegerät und/oder der Cloud vorgesehen sein. Dadurch ist es möglich, dem Fahrer des Fahrzeugs unmittelbar auf der im Fahrzeuginnenraum befindlichen Wiedergabeeinheit die zu erwartende Lebensdauer einzelner Teilkomponenten, einzelner Einheiten des indirekten Sichtsystems oder des gesamten indirekten Sichtsystems anzuzeigen, um vor einem Ausfall die entsprechende Teilkomponente, die entsprechende Einheit und/oder das gesamte indirekte Sichtsystem zu ersetzen.

Gemäß der vorliegenden Erfindung kann das Wartungssystem auch eine Handlungsempfehlungseinheit enthalten, die das Wartungssignal von der Auswerteeinheit empfängt und ein Handlungssignal basierend auf dem Wert des Zählers erzeugt und zur Übertragung an die mindestens eine Wiedergabeeinheit, an ein Diagnosegerät und/oder an eine Cloud sendet. Durch ein derartiges Handlungssignal kann einem Benutzer unmittelbar angezeigt werden, wie er einzelne Teilkomponenten oder Einheiten des indirekten Sichtsystems handhaben muss bzw. ihm kann direkt beispielsweise in Textform angezeigt werden, ob und welche Bauteile ausgetauscht werden müssen oder weiterverwendet werden können bzw. wie lange sie noch verwendet werden können. Durch die Ausgabe des Wartungssignals und/oder des Handlungssignals an ein externes Diagnosegerät kann beispielsweise in einer Werkstatt festgestellt werden, ob einzelne Teilkomponenten oder Einheiten des indirekten Sichtsystems oder das gesamte indirekte Sichtsystem ausgetauscht werden müssen bzw. weiterverwendet werden können. Durch das Ausgeben des Wartungssignals an die Cloud ist eine ortsunabhängige Analyse der Einheiten und derer Teilkomponenten des indirekten Sichtsystems bzw. des gesamten indirekten Sichtsystems bezüglich einer voraussichtlichen Lebensdauer möglich.

Gemäß der vorliegenden Erfindung kann die in dem Wartungssignal enthaltene Information gespeichert werden, entweder in einem zentralen Speicher des Wartungssystems und/oder in internen Speichern, die in den Teilkomponenten, den einzelnen Einheiten des indirekten Sichtsystems und/oder in dem gesamten indirekten Sichtsystem enthalten sind. Auf diese Weise ist es möglich, die in dem Wartungssignal enthaltene Information direkt aus einzelnen Teilkomponente bzw. Einheiten des indirekten Sichtsystems auszulesen, um deren voraussichtliche Lebensdauer zu ermitteln und zu entscheiden, ob ein Austausch notwendig oder eine Weiterbenutzung (beispielsweise in einem anderen System) möglich ist.

Gemäß der vorliegenden Erfindung kann die Empfangseinheit und/oder die Auswerteeinheit des Wartungssystems auch Teil des indirekten Sichtsystems sein. Auf diese Weise kann das Wartungssignal bzw. ein Handlungssignal direkt in dem indirekten Sichtsystem erzeugt und ausgewertet werden.

Gemäß einem erfindungsgemäßen Verfahren zum Erzeugen eines Wartungssignals für ein indirektes Sichtsystem eines Fahrzeugs, das mindestens eine optische Sensoreinheit, mindestens eine Verarbeitungseinheit und/oder mindestens eine Wiedergabeeinheit aufweist, werden folgende Schritte durchgeführt: Empfangen von Daten und Erzeugen eines Wartungssignals basierend auf den empfangenen Daten, das angibt, wie lange und ob mindestens eine Teilkomponente von der mindestens einen optischen Sensoreinheit, der mindestens einen Verarbeitungseinheit und/oder der mindestens einen Wiedergabeeinheit, und/oder die mindestens eine von der mindestens einen optischen Sensoreinheit, der mindestens einen Verarbeitungseinheit und der mindestens einen Wiedergabeeinheit, und/oder das gesamte indirekte Sichtsystem noch verwendbar ist.

Gemäß dem erfindungsgemäßen Verfahren können die empfangenen Daten Fahrzeugdaten enthalten, die von mindestens einem Fahrzeugsensor erfasst werden bzw. von einem Steuergerät des Fahrzeugs geliefert werden, und die für die Lebensdauer des Fahrzeugs, der mindestens einen Teilkomponente, der mindestens einen aus der mindestens einen optischen Sensoreinheit, der mindestens einen Verarbeitungseinheit und der mindestens einen Wiedergabeeinheit, und/oder des indirekten Sichtsystems relevant sind. Die empfangenen Daten können zusätzlich oder alternativ Umweltdaten enthalten, die von mindestens einem weiteren Sensor erhalten werden, und die fahrzeugunabhängig sind und von externen Umweltfaktoren abhängen.

Gemäß dem erfindungsgemäßen Verfahren können die Fahrzeugdaten Information enthalten über gefahrene Kilometer des Fahrzeugs, gefahrene Kilometer des Fahrzeugs bei Betrieb der mindestens einen Teilkomponente, der mindestens einen aus der mindestens einen optischen Sensoreinheit, der Verarbeitungseinheit und der Wiedergabeeinheit und/oder des gesamten indirekten Sichtsystems, Betriebsdauer des Fahrzeugs, Betriebsdauer der mindestens einen aus der optischen Sensoreinheit, der Verarbeitungseinheit und der Wiedergabeeinheit und/oder des gesamten indirekten Sichtsystems bei Betrieb des Fahrzeugs, und/oder in Fahrzeugkomponenten aufgetretene Fehler.

Gemäß dem erfindungsgemäßen Verfahren können die externen Umweltdaten Information enthalten über Temperatur, Luftfeuchtigkeit, Luftdruck, UV-Belastung, Staub, Feinstaub, und/oder mechanische Belastungen, denen die mindestens eine Teilkomponente, die mindestens eine aus der mindestens einen optischen Sensoreinheit, der mindestens einen Verarbeitungseinheit und der mindestens einen Wiedergabeeinheit, und/oder das indirekte Sichtsystem ausgesetzt ist.

Gemäß dem erfindungsgemäßen Verfahren kann ein Funktionswert berechnet werden mittels einer Berechnungsfunktion bzw. Berechnungsmatrix, die mindestens einen Teil der empfangenen Fahrzeugdaten und/oder der Umweltdaten als Parameter bzw. Matrixeinträge aufweist, wobei das Wartungssignal basierend auf dem berechneten Funktionswert bzw. Matrixeintrag erzeugt wird.

Gemäß dem erfindungsgemäßen Verfahren können mehrere Wartungssignale kombiniert werden und das resultierende Wartungssignal kann verwendet werden, um anzugeben, wie lange die mindestens eine Teilkomponente, die mindestens eine aus der mindestens einen optischen Sensoreinheit, der mindestens einen Verarbeitungseinheit und der mindestens einen Wiedergabeeinheit, und/oder das gesamte indirekte Sichtsystem noch verwendbar ist.

Gemäß dem erfindungsgemäßen Verfahren können die empfangenen Daten und/oder berechneten Daten mit einem Schwellenwert verglichen werden, und ein Zähler kann erhöht werden, wenn der Schwellenwert überschritten wird.

Gemäß dem erfindungsgemäßen Verfahren kann das Wartungssignal basierend auf dem Wert des Zählers erzeugt werden und an die mindestens eine Wiedergabeeinheit, an ein Diagnosegerät und/oder an eine Cloud ausgegeben werden.

Das erfindungsgemäße Verfahren kann ferner ein Handlungssignal basierend auf dem Wert des Zählers erzeugen und an die mindestens eine Wiedergabeeinheit, das Diagnosegerät und/oder die Cloud ausgegeben.

Gemäß dem erfindungsgemäßen Verfahren können ferner die von den Sensoren und/oder dem Steuergerät empfangenen Daten, die berechneten Daten, Schwellenwerte und/oder Wartungssignale in der mindestens einen Teilkomponente, der mindestens einen aus der mindestens einen optischen Sensoreinheit, der mindestens einen Verarbeitungseinheit und der mindestens einen Wiedergabeeinheit und/oder dem indirekten Sichtsystem gespeichert werden.

Das erfindungsgemäße Verfahren kann von dem oben genannten erfindungsgemäßen Wartungssystem verwendet werden.

### Aspekte der Erfindung

1. Wartungssystem für ein indirektes Sichtsystem (2) eines Fahrzeugs (1), enthaltend:
   das indirekte Sichtsystem (2) mit:
      mindestens einer optischen Sensoreinheit (3) zum Erfassen von Bilddaten der Umgebung des Fahrzeugs,
      mindestens einer Verarbeitungseinheit (9) zum Verarbeiten der von der optischen Sensoreinheit (3) erfassten Bilddaten, und
      mindestens einer Wiedergabeeinheit (4), auf der die von der Verarbeitungseinheit (9) verarbeiteten Bilddaten angezeigt werden,
      wobei mindestens eine aus der mindestens einen optischen Sensoreinheit (3), der mindestens einen Verarbeitungseinheit (9) und der mindestens einen Wiedergabeeinheit (4) mindestens eine Teilkomponente (16, 17, 18, 19, 23, 24, 26) enthält;
   eine Empfangseinheit (6) zum Empfangen von Daten; und
   eine Auswerteeinheit (10), die basierend auf den von der Empfangseinheit (6) empfangenen Daten ein Wartungssignal erzeugt, das angibt, wie lange und/oder ob die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.
2. Wartungssystem nach Aspekt 1, ferner enthaltend
   mindestens einen Fahrzeugsensor (7), der Fahrzeugdaten an die Empfangseinheit (6) sendet, die für die Lebensdauer des Fahrzeugs (1), der mindestens einen Teilkomponente (16, 17, 18, 19, 23, 24, 26) und/oder der mindestens einen aus der mindestens einen optischen Sensoreinheit (3), der mindestens einen Verarbeitungseinheit (9) und der mindestens einen Wiedergabeeinheit (4), relevant sind, und/oder
   mindestens einen weiteren Sensor (8), der Umweltdaten an die Empfangseinheit (6) sendet, die fahrzeugunabhängig sind und von Umweltfaktoren abhängen.
3. Wartungssystem nach Aspekt 2, bei dem die mindestens eine optische Sensoreinheit (3), die mindestens eine Verarbeitungseinheit (9), die mindestens eine Wiedergabeeinheit (4) und/oder die mindestens eine Teilkomponente (16, 17, 18, 19, 23, 24, 26) den mindestens einen weiteren Sensor (8) enthalten.
4. Wartungssystem nach Aspekt 2 oder 3, bei dem die Fahrzeugdaten Information enthalten über gefahrene Kilometer des Fahrzeugs, gefahrene Kilometer des Fahrzeugs bei Betrieb der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems, Betriebsdauer des Fahrzeugs, Betriebsdauer der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems bei Betrieb des Fahrzeugs, und/oder in Fahrzeugkomponenten aufgetretene Fehler.
5. Wartungssystem nach Aspekt 2 oder 3, bei dem die Umweltdaten Information enthalten über Temperatur, Luftfeuchtigkeit, Luftdruck, UV-Belastung, Staub, Feinstaub, und/oder mechanische Belastung, denen die mindestens eine Teilkomponente (16, 17, 18, 19, 23, 24, 26), die mindestens eine aus der optischen Sensoreinheit (3), der Verarbeitungseinheit (9) und der Wiedergabeeinheit (4) und/oder das gesamte indirekte Sichtsystem, ausgesetzt ist.
6. Wartungssystem nach einem der vorangegangenen Aspekte, bei dem die Auswerteeinheit (10) ferner eine Berechnungseinheit (32) aufweist, die mindestens einen Teil der von der Empfangseinheit (6) empfangenen Fahrzeugdaten und/oder Umweltdaten von dem mindestens einen Fahrzeugsensor (7) und/oder dem mindestens einen weiteren Sensor (8) einer Berechnungsfunktion bzw. Berechnungsmatrix unterzieht und das Wartungssignal basierend auf dem berechneten Wert erzeugt, wobei die Berechnungsfunktion bzw. die Berechnungsmatrix mindestens einen Teil der empfangenen Fahrzeugdaten und/oder Umweltdaten als Funktionsparameter bzw. Matrixelement aufweist.
7. Wartungssystem nach einem der vorangegangenen Aspekte, bei dem mehrere Wartungssignale verwendet und berechnet werden, und das resultierende Wartungssignal angibt, wie lange die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.
8. Wartungssystem nach einem der vorangegangenen Aspekte, bei dem die Auswerteeinheit (10) einen Zähler (30) und eine Vergleichseinheit (29) enthält, wobei die von der Empfangseinheit (6) empfangenen Daten und/oder berechneten Daten mit einem Schwellenwert verglichen werden und der Zähler (30) sich erhöht, wenn der Schwellenwert überschritten wird.
9. Wartungssystem nach Aspekt 7, bei dem die Auswerteeinheit (10) das Wartungssignal basierend auf dem Wert des Zählers (30) erzeugt.
10. Wartungssystem nach Aspekt 9, ferner enthaltend
   eine Handlungsempfehlungseinheit (12), die das Wartungssignal von der Auswerteeinheit (10) empfängt, ein Handlungssignal basierend auf dem Wert des Zählers (30) erzeugt und zur Wiedergabe an die mindestens eine Wiedergabeeinheit (4), an ein Diagnosegerät (11) und/oder an eine Cloud (13) sendet.
11. Wartungssystem nach einem der vorangegangenen Aspekte, bei dem das von der Auswerteeinheit (10) erzeugte Wartungssignal zur Wiedergabe an die mindestens eine Wiedergabeeinheit (4), an ein Diagnosegerät (11) und/oder an eine Cloud (13) gesendet wird.
12. Wartungssystem nach einem der vorangegangenen Aspekte, ferner enthaltend
   einen Speicher (20), der die von der Empfangseinheit (6) empfangenen Daten, die von der Berechnungseinheit (32) berechneten Daten, das Wartungssignal, das Handlungssignal und/oder den Schwellenwert speichert.
13. Wartungssystem nach einem der vorangegangenen Aspekte, bei dem
   die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem einen Speicher (20) enthält, in dem die in dem Wartungssignal enthaltene Information gespeichert wird, die angibt, wie lange und/ob die Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.
14. Wartungssystem nach einem der vorangegangenen Aspekte, bei dem die Empfangseinheit (6) und/oder die Auswerteeinheit (10) Teil des indirekten Sichtsystems (2) sind.
15. Verfahren zum Erzeugen eines Wartungssignals für ein indirektes Sichtsystem eines Fahrzeugs, mit mindestens einer optischen Sensoreinheit (3), mindestens einer Verarbeitungseinheit (9) und/oder mindestens einer Wiedergabeeinheit (4), mit den Schritten:
   Empfangen von Daten; und
   Erzeugen eines Wartungssignals basierend auf den empfangenen Daten, das angibt, wie lange mindestens eine Teilkomponente (16, 17, 18, 19, 23, 24, 26) von der mindestens einen optischen Sensoreinheit (3), der mindestens einen Verarbeitungseinheit (9) und/oder der mindestens einen Wiedergabeeinheit (4), und/oder die mindestens eine von der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.
16. Verfahren nach Aspekt 15, bei dem
   die empfangenen Daten Fahrzeugdaten enthalten, die von mindestens einem Fahrzeugsensor (7) erfasst werden, und die für die Lebensdauer des Fahrzeugs (1), der mindestens einen Teilkomponente (16, 17, 18, 19, 23, 24, 26), der mindestens einen aus der mindestens einen optischen Sensoreinheit (3), der mindestens einen Verarbeitungseinheit (9) und der mindestens einen Wiedergabeeinheit (4) und/oder des indirekten Sichtsystems (2) relevant sind, und/oder
   die empfangenen Daten Umweltdaten enthalten, die von mindestens einem weiteren Sensor (8) erhalten werden, und die fahrzeugunabhängig sind und von Umweltfaktoren abhängen.
17. Verfahren nach Aspekt 16, bei dem
   die für die Fahrzeugdaten Information enthalten über gefahrene Kilometer des Fahrzeugs, gefahrene Kilometer des Fahrzeugs bei Betrieb der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems, Betriebsdauer des Fahrzeugs, Betriebsdauer der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems bei Betrieb des Fahrzeugs, und/oder in Fahrzeugkomponenten aufgetretene Fehler.
18. Verfahren nach Aspekt 16, bei dem
   die Umweltdaten Information enthalten über Temperatur, Luftfeuchtigkeit, Luftdruck, UV-Belastung, Staub, Feinstaub, und/oder mechanische Belastung, denen die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und /oder das indirekte Sichtsystem ausgesetzt ist.
19. Verfahren nach einem der Aspekte 15 bis 18, ferner mit
   Berechnen einen Funktionswerts, wobei die Berechnungsfunktion mindestens einen Teil der empfangenen Fahrzeugdaten und/oder der Umweltdaten als Parameter aufweist; und
   Erzeugen des Wartungssignals basierend auf dem Funktionswert.
20. Verfahren nach einem der vorangegangenen Aspekte, ferner mit
   Kombinieren von mehreren Wartungssignalen; und
   Verwenden des resultierenden Wartungssignals, das angibt, wie lange die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.
21. Verfahren nach Aspekt 19 oder 20, ferner mit
   Vergleichen der empfangenen Daten und/oder der berechneten Daten mit einem Schwellenwert; und
   Erhöhen eines Zählers (30), wenn der Schwellenwert überschritten wird.
22. Verfahren nach Aspekt 21, ferner mit
   Erzeugen des Wartungssignals basierend auf dem Wert des Zählers (30), und
   Ausgeben des Wartungssignals an die mindestens eine Wiedergabeeinheit (4), an ein Diagnosegerät (11) und/oder an eine Cloud (13).
23. Verfahren nach Aspekt 21 oder 22, ferner mit
   Erzeugen eines Handlungssignals basierend auf dem Wert des Zählers, und
   Ausgeben des Handlungssignals an die mindestens eine Wiedergabeeinheit (4), ein Diagnosegerät (11) und/oder eine Cloud (13).
24. Verfahren nach einem der Aspekte 15 bis 23, ferner mit
   Speichern der empfangenen Daten, der berechneten Daten, des Schwellenwerts und/oder des Wartungssignals in mindestens der Teilkomponente (16, 17, 18, 19, 23, 24, 26), mindestens einer aus der mindestens einen optischen Sensoreinheit (3), der mindestens einen Verarbeitungseinheit (9) und der mindestens einen Wiedergabeeinheit (4), und/oder in dem indirekte Sichtsystem.

### Beschreibung bevorzugter Ausführungsformen

Im Folgenden werden unter Bezugnahme auf die beigefügten Figuren bevorzugte Ausführungsformen der Erfindung beschrieben. Es zeigen:
Figur 1 eine Draufsicht auf ein Fahrzeug mit einem indirekten Sichtsystem, für das das erfindungsgemäße Wartungssystem und Wartungsverfahren verwendet werden können;
Figur 2 eine schematische Ansicht der wesentlichen Komponenten des Wartungssystems gemäß der Erfindung gemäß einer Ausführungsform;
Figur 3 eine schematische Ansicht einer optischen Sensoreinheit des indirekten Sichtsystems von Figur 1;
Figur 4 eine schematische Ansicht einer Verarbeitungseinheit des indirekten Sichtsystems von Figur 1;
Figur 5 eine Wiedergabeeinheit des indirekten Sichtsystems von Figur 1;
Figur 6 eine Auswerteeinheit des erfindungsgemäßen Wartungssystems;
Figur 7 eine schematische Darstellung einer Berechnungsmatrix, die von dem erfindungsgemäßen Wartungssystem und -verfahren zur Ermittlung des Wartungssignals gemäß einem Ausführungsbeispiel der Erfindung verwendet wird;
Figur 8 eine Handlungsempfehlungseinheit des erfindungsgemäßen Wartungssystems;
Figur 9 ein schematisches Ablaufdiagramm eines erfindungsgemäßen Verfahrens mit alternativen Ausführungsformen; und
Figur 10 ein schematisches Ablaufdiagramm des erfindungsgemäßen Verfahrens gemäß einer alternativen Ausführungsform.

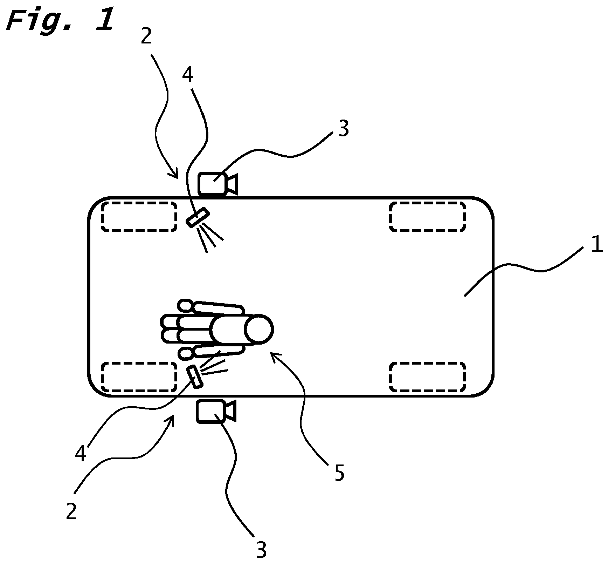

Figur 1 zeigt ein Fahrzeug 1, an dem ein indirektes Sichtsystem 2 angeordnet ist, wobei Kameraflügel an einer linken und rechten Seite des Fahrzeugs 1 jeweils angeordnet sind. Das indirekte Sichtsystem 2 enthält eine optische Sensoreinheit 3 und eine Wiedergabeeinheit 4. Von der optischen Sensoreinheit 3 aufgenommene Bilddaten werden einem Fahrer 5 des Fahrzeugs 1 auf der Wiedergabeeinheit 4 angezeigt.

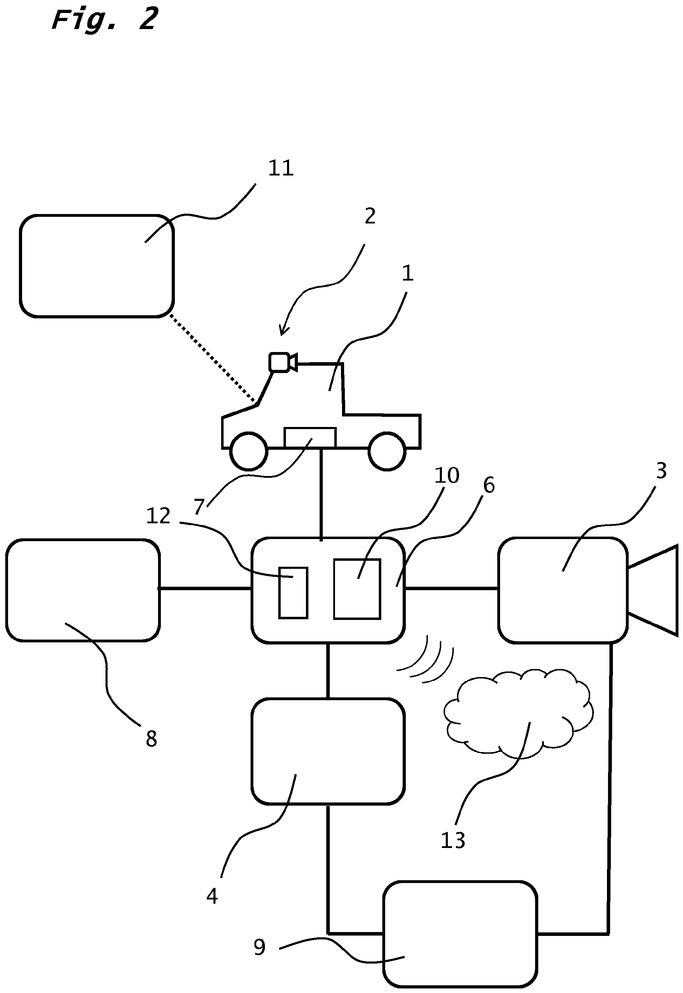

Figur 2 zeigt Komponenten eines Wartungssystems gemäß einem bevorzugten Ausführungsbeispiel der Erfindung. Das Wartungssystem enthält das indirekte Sichtsystem 2 gemäß Figur 1, eine Empfangseinheit 6 zum Empfangen von Daten von einem Fahrzeugsensor 7 und von einem Umweltsensor 8. Der Fahrzeugsensor 7 enthält einen oder mehrere Sensoren, die in dem Fahrzeug 1 vorhanden sind. Der Fahrzeugsensor 7 kann auch eine Steuereinheit des Fahrzeugs 1 sein, die relevante Daten an die Empfangseinheit 6 des Wartungssystems sendet. Der mindestens eine Fahrzeugsensor 7 erfasst Fahrzeugdaten, die relevant sind für die Lebensdauer des Fahrzeugs 1 sowie für die Lebensdauer des indirekten Sichtsystems 2, dessen optische Sensoreinheit 3, Wiedergabeeinheit 4 und/oder Verarbeitungseinheit 9 und deren Teilkomponenten.

Gemäß dem bevorzugten Ausführungsbeispiel kann das Wartungssystem für ein indirektes Sichtsystem 2 verwendet werden, das mehrere optische Sensoreinheiten 3, Wiedergabeeinheiten 4 und Verarbeitungseinheiten 9 aufweist. Die Verarbeitungseinheit 9 kann ein separates Bauteil des indirekten Sichtsystems 2 sein oder Bestandteil der optische Sensoreinheit 3 und/oder der Wiedergabeeinheit 4. Die Verarbeitungseinheit 9 dient in erster Linie dazu, von der optischen Sensoreinheit 3 erfasste Bilddaten zu verarbeiten und auf der Wiedergabeeinheit 4 anzuzeigen. Alternativ können die erfassten Bilddaten unverarbeitet auf der Wiedergabeeinheit 4 angezeigt werden.

Die von dem Fahrzeugsensor 7 erfassten Daten betreffen für das Fahrzeug relevante Daten, wie gefahrene Kilometer des Fahrzeugs, gefahrene Kilometer des Fahrzeugs bei Betrieb des indirekten Sichtsystems 2 bzw. dessen Einheiten 3, 4, 9 und deren Teilkomponenten. Der mindestens eine weitere Sensor 8 erfasst in erster Linie Umweltdaten, die fahrzeugunabhängig sind und von Umweltfaktoren abhängen. Derartige Umweltdaten enthalten beispielsweise Information über Temperatur, Luftfeuchtigkeit, Luftdruck, UV-Belastung, Staub, Feinstaub und/oder mechanische Belastungen des indirekten Sichtsystems 2 bzw. dessen Einheiten 3, 4, 9 und deren Teilkomponenten.

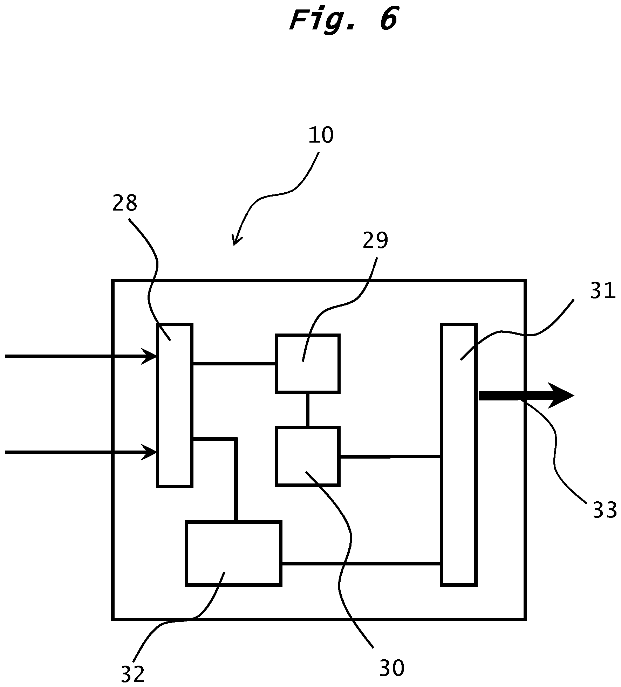

Wie in Figur 2 gezeigt, enthält die Empfangseinheit 6 des Wartungssystems gemäß dem bevorzugten Ausführungsbeispiel eine Auswerteeinheit 10, die später unter Bezugnahme auf die Figur 6 näher beschrieben wird. Die Auswerteeinheit 10 erzeugt basierend auf den von dem Fahrzeugsensor 7 und dem weiteren Sensor 8 empfangenen Daten ein Wartungssignal, das angibt, wie lange das indirekte Sichtsystem bzw. dessen Einheiten 3, 4, 9 und deren Teilkomponenten noch verwendbar sind. Gemäß dem bevorzugten Ausführungsbeispiel ist der weitere Sensor 8 jeweils in der optischen Sensoreinheit 3, der Wiedergabeeinheit 4 und der Verarbeitungseinheit 9 vorgesehen, kann alternativ jedoch auch als separates Bauteil vorgesehen werden, das an einer beliebigen Stelle am Fahrzeug 1 angebracht ist.

Figur 2 zeigt ferner ein externes Diagnosegerät 11, das beispielsweise bei einem Werkstattbesuch an das Fahrzeug 1 angeschlossen werden kann, um das von der Auswerteeinheit 10 erzeugte Wartungssignal auszulesen und einem Benutzer des Diagnosegeräts 11 die Restlebensdauer (den Verschleiß) der Einheiten des indirekten Sichtsystems 2 bzw. dessen Teilkomponenten und/oder des gesamten indirekten Sichtsystems 2 anzuzeigen.

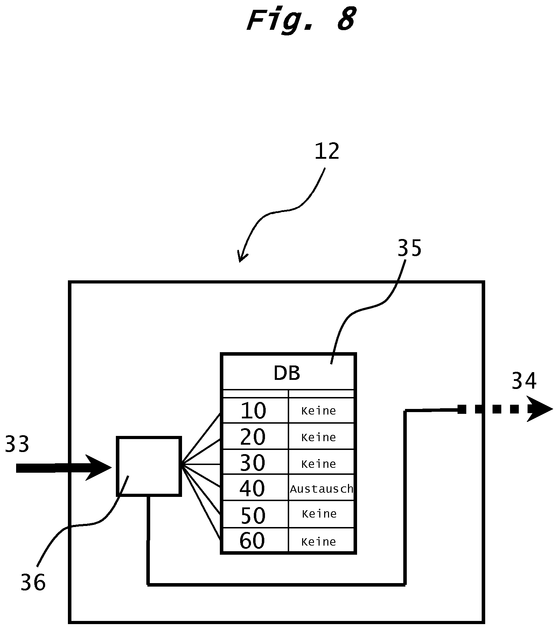

Figur 2 zeigt ferner eine Handlungsempfehlungseinheit 12, die später unter Bezugnahme auf Figur 8 näher beschrieben wird und ein Handlungssignal ausgibt, das von dem Diagnosegerät 11, der Wiedergabeeinheit 4 und/oder Cloud empfangen werden kann. Das Handlungssignal zeigt dem Benutzer des Diagnosegeräts 11 konkrete Handlungen beispielsweise in Textform an, die er vornehmen muss, beispielsweise eine Teilkomponente oder eine Einheit des indirekten Sichtsystems oder das gesamte indirekte Sichtsystem 2 zu ersetzen.

Figur 2 zeigt ferner eine schematisch dargestellte Cloud 13, an die gemäß dem bevorzugten Ausführungsbeispiel das erzeugte Wartungssignal und/oder das Handlungssignal gesendet werden, um anderweitig weiter verarbeitet zu werden. Gemäß einem anderen Ausführungsbeispiel werden auch alle Daten von dem Fahrzeugsensor 7 und dem weiteren Sensor 8 in die Cloud 13 gesendet. Ebenso werden Daten aus der Cloud 13 durch die Empfangseinheit 6 empfangen. Derartige Daten enthalten beispielsweise Schwellenwerte oder eine Berechnungsmatrix, die zur Erzeugung des Wartungssignals, verwendet werden, wie später beschrieben. Ebenso können Umweltdaten, wie oben beschrieben, von der Cloud an die Empfangseinheit 6 gesendet werden. Diese Daten können zusätzlich oder alternativ zu den Daten von dem Fahrzeugsensor 7 und dem weiteren Sensor 8 für die Erzeugung des Wartungssignals bzw. des Handlungssignals verwendet werden.

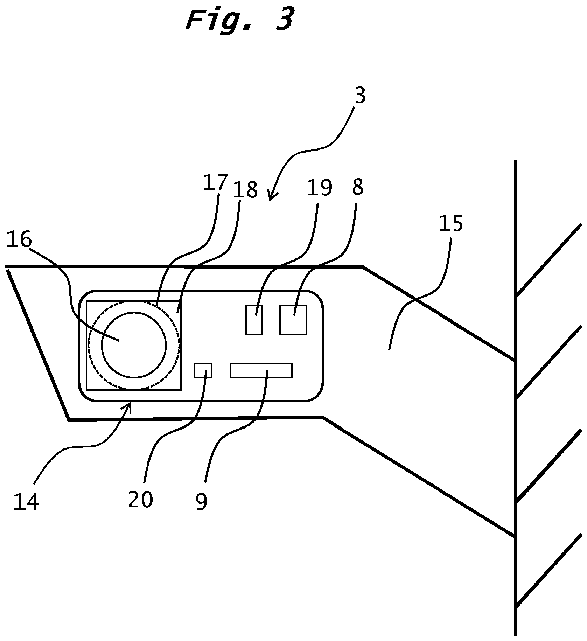

Figur 3 zeigt die optische Sensoreinheit 3 mit beispielhafte Teilkomponenten. Als beispielhafte Teilkomponenten zeigt Figur 3 ein Kameragehäuse 14, einen Kameraflügel 15, ein Linsensystem 16, eine Linsenheizung 17, einen Bildsensor 18, eine Verarbeitungsplatine 19 mit beispielsweise Netzteil, Spannungsregler, Speicherbausteinen, Prozessoren, Widerständen, Übertragungschips und dergleichen (nicht gezeigt), und eine Dichtung 20. Figur 3 zeigt ferner die Verarbeitungseinheit 9, die von dem Bildsensor 18 aufgenommen Bilddaten verarbeitet zur Anzeige auf der in Figur 2 gezeigten Wiedergabeeinheit 4. Die Verarbeitungseinheit 9 kann gemäß anderen Ausführungsformen außerhalb der optischen Sensoreinheit 3 angeordnet werden, beispielsweise in der Wiedergabeeinheit 4.

Figur 3 zeigt ferner den weiteren Sensor 8 von Figur 2, der gemäß dem vorliegenden Ausführungsbeispiel in der optischen Sensoreinheit 3 angeordnet ist, um Umweltdaten zu erfassen, die fahrzeugunabhängig sind und von Umweltfaktoren abhängen. Der in der optischen Sensoreinheit 3 angeordnete weitere Sensor 8 erfasst beispielsweise die in der optischen Sensoreinheit 3 vorherrschende Temperatur, Luftfeuchtigkeit und/oder andere oben genannte Umweltdaten. Diese werden an die Auswerteeinheit 10 und/oder die Handlungsempfehlungseinheit 12 ausgegeben, um beispielswiese ein Wartungssignal bzw. Handlungssignal für die Sensoreinheit 3 zu erzeugen.

Figur 3 zeigt ferner einen internen Speicher 20 in der optischen Sensoreinheit 3. Der interne Speicher 20 speichert gemäß dem bevorzugten Ausführungsbeispiel alle relevanten Daten, wie von dem weiteren Sensor 8 detektierte Umweltdaten, von der Verarbeitungseinheit 9 verarbeitete Bilddaten, von dem Bildsensor 18 erfasste Bilddaten, von der Auswerteeinheit 10 erzeugte Wartungssignale und/oder von der Handlungsempfehlungseinheit 12 ausgegebene Handlungssignale.

Gemäß dem bevorzugten Ausführungsbeispiel gibt die in dem internen Speicher 20 gespeicherte Information, die in dem Wartungssignal enthalten ist, die voraussichtliche Lebensdauer der optischen Sensoreinheit 3 bzw. von mindestens einer der Teilkomponenten 16, 17, 18, 19, 20 an. Die in dem internen Speicher 20 der optischen Sensoreinheit 3 gespeicherte Information kann beispielsweise gemäß dem bevorzugten Ausführungsbeispiel, von dem in Figur 2 gezeigten Diagnosegerät 11 ausgelesen werden, auf der Wiedergabeeinheit 4 angezeigt werden und/oder an die Cloud 13 gesendet werden.

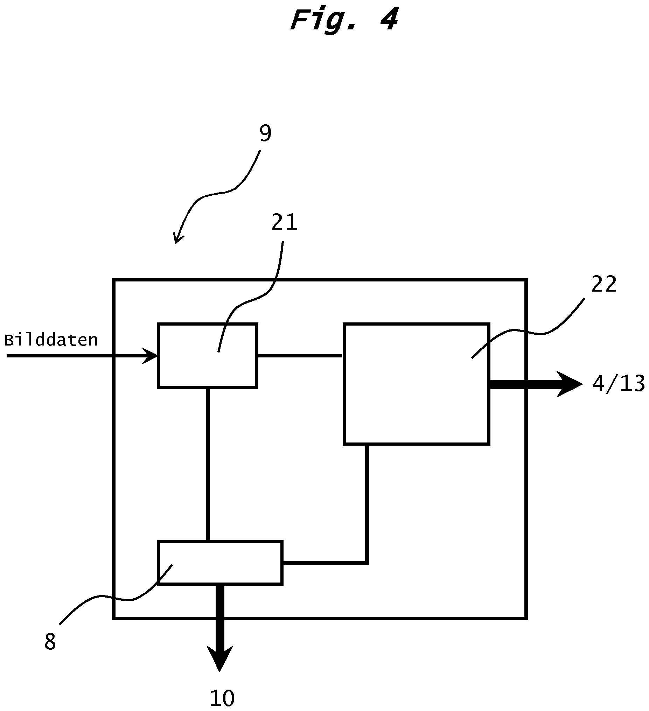

Figur 4 zeigt schematisch die in Figur 3 gezeigte Verarbeitungseinheit 9. Die Verarbeitungseinheit 9 enthält einen Speicher 21, in dem beispielsweise von dem Bildsensor 18 erfasste Bilddaten gespeichert werden können. Figur 4 zeigt ferner eine Platine 22, die die in dem Speicher 21 zwischengespeicherten Bilddaten geeignet verarbeitet zur Ausgabe auf der Wiedergabeeinheit 4. Gemäß dem bevorzugten Ausführungsbeispiel weist die Verarbeitungseinheit 9, wie in Figur 4 gezeigt, den weiteren Sensor 8 auf, der die oben genannten Umweltdaten erfassen kann, welche beispielsweise zusätzlich in dem Speicher 21 gespeichert werden. Die Verarbeitungseinheit 9 ist in der Lage, die von dem weiteren Sensor 8 erfassten Daten bzw. die in dem Speicher 21 gespeicherten Umweltdaten zur weiteren Auswertung an die Auswerteeinheit 10 und/oder die Handlungsempfehlungseinheit 12 auszugeben zur Erzeugung eines Wartungssignals bzw. Handlungssignals. Das Wartungssignal ist dabei kennzeichnend für die voraussichtliche Restlebensdauer der Verarbeitungseinheit 9. Das Wartungssignal und/oder das Handlungssignal werden gemäß dem Ausführungsbeispiel in dem Speicher 21 gespeichert und können von dem Diagnosegerät 11, der Wiedergabeeinheit 4 und/oder der Cloud 13 ausgelesen werden.

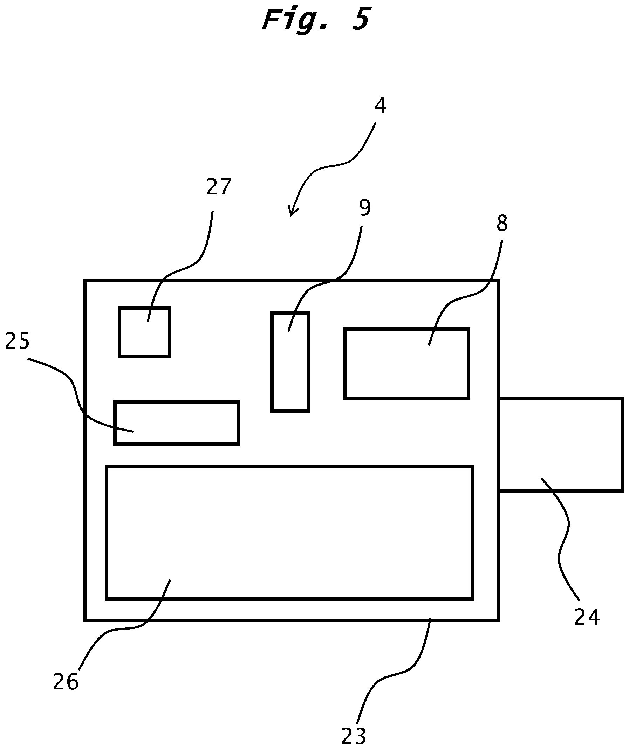

Figur 5 zeigt eine schematische Ansicht der Wiedergabeeinheit 4 des indirekten Sichtsystems 2 von Fig.1 gemäß einem Ausführungsbeispiel. Als Teilkomponenten der Wiedergabeeinheit 4 zeigt Figur 5 beispielsweise ein Gehäuse 23, eine Platine 25 mit Netzteil, Spannungsregler, FPGA oder anderen Prozessoren, Mikrocontrollern, Speicherbausteinen, Widerständen, Pegelwandlern, Übertragungschips, CAN-Controllern, etc.

Wie in Figur 5 gezeigt, enthält die Wiedergabeeinheit 4 den weiteren Sensor 8, um die oben genannten Umweltdaten zu erfassen. Gemäß diesem Ausführungsbeispiel ist die in Figur 4 gezeigte Verarbeitungseinheit 9 in der Wiedergabeeinheit 4 enthalten, kann alternativ aber auch als separates Bauteil des indirekten Sichtsystems vorgesehen sein. Figur 5 zeigt ferner einen Anzeigebereich 26 sowie einen Speicher 27. Auf dem Anzeigebereich 26 werden die von der Verarbeitungseinheit 9 verarbeiteten Bilddaten dem Fahrer 5 des Fahrzeugs 1 angezeigt. In dem Speicher 27 werden gemäß diesem Ausführungsbeispiel die von dem weiteren Sensor 8 erfassten Umweltdaten gespeichert und in ähnlicher Weise wie in Bezug auf die optische Sensoreinheit 3 beschrieben an die Auswerteeinheit 10 bzw. Handlungsempfehlungseinheit 12 ausgegeben, und/oder werden direkt an die Cloud 13 und/oder ein Diagnosegerät 11 gesendet. Das erzeugte Wartungssignal für die Wiedergabeeinheit 4 und/oder das Handlungssignal werden gemäß dem Ausführungsbeispiel in dem Speicher 27 gespeichert und können von dem Diagnosegerät 11 und/oder der Cloud 13 ausgelesen werden. Das Wartungssignal und/oder das Handlungssignal werden gemäß dem Ausführungsbeispiel auf dem Anzeigebereich 26 der Wiedergabeeinheit 4 angezeigt.

Figur 6 zeigt die Auswerteeinheit 10 gemäß dem bevorzugten Ausführungsbeispiel des Wartungssystems. Die Auswerteeinheit 10 empfängt an einem Eingangsmodul 28 Daten von einem Fahrzeugsensor 7 und/oder dem weiteren Sensor 8. Gemäß dem bevorzugten Ausführungsbeispiel werden Daten von den weiteren Sensoren 8 der optischen Sensoreinheit 3, der Wiedergabeeinheit 4 und/oder der Verarbeitungseinheit 9 empfangen wie oben beschrieben. Wie in Figur 6 gezeigt, enthält die Auswerteeinheit 10 eine Vergleichseinheit 29 und einen Zähler 30. Die Vergleichseinheit 29 erhält beispielsweise von dem Eingangsmodul 28 einen Temperaturwert und vergleicht diesen Temperaturwert mit einem vorbestimmten Schwellenwert. Wird dieser vorbestimmte Schwellenwert überschritten, insbesondere während einer bestimmten Zeitdauer, so wird gemäß dem bevorzugten Ausführungsbeispiel der Zähler 30 erhöht. Wird beispielsweise der Schwellenwert für eine vorbestimmte Zeitdauer überschritten, kann der Zähler um einen vorbestimmten Wert erhöht werden, der von der vorbestimmten Zeitdauer abhängt. Wird der Schwellenwert beispielsweise für 10 Minuten überschritten, kann der Zähler um eins erhöht werden. Wird der Schwellenwert beispielsweise für weitere 10 Minuten überschritten, kann der Zähler erneut um eins erhöht werden, usw. Andere Abhängigkeiten zwischen Zeitdauer und Zählerwerterhöhung sind gemäß der Erfindung denkbar und können auch von der Art der Umweltdaten abhängen.

Alternativ kann ein Mittelwert über mehrere erhaltene Temperaturwerte in einem vorbestimmten Zeitintervall ermittelt werden und mit dem vorbestimmten Schwellenwert verglichen werden, um bei Überschreiten des Schwellenwerts den Zähler um einen vorbestimmten Wert zu erhöhen. Der Wert des Zählers 30 wird über ein Ausgangsmodul 31 der Auswerteeinheit 10 ausgegeben. Der oben genannte Schwellenwert ist ein von dem Hersteller des indirekten Sichtsystems, einer Einheit des indirekten Sichtsystems oder einer Teilkomponente davon vorgegebener Wert, der kennzeichnend ist für die voraussichtliche Gesamtlebensdauer der entsprechenden Komponente.

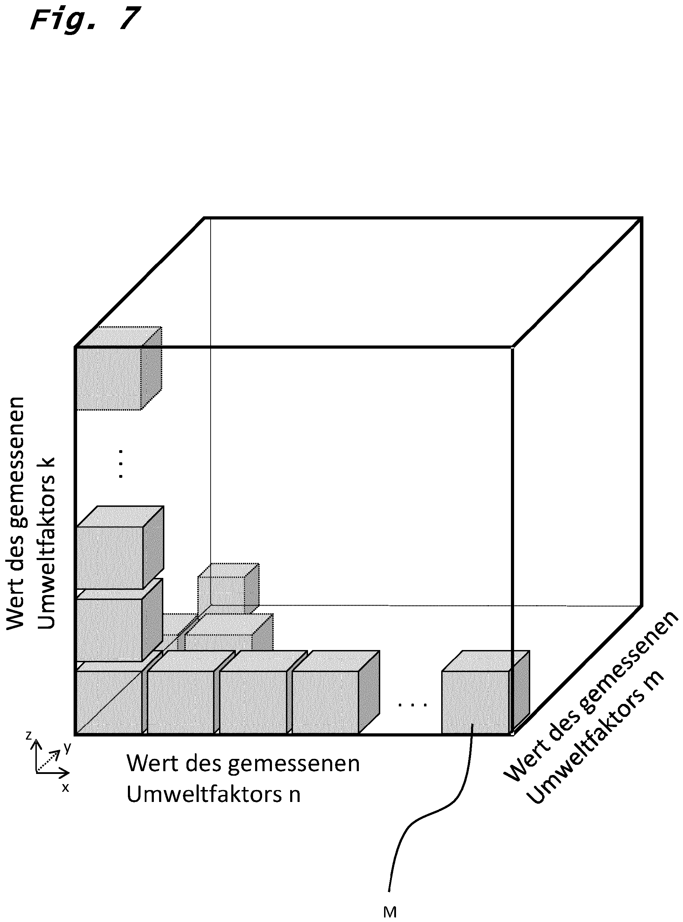

Die Auswerteeinheit 10 weist ferner eine Berechnungseinheit 32 auf, die empfangene Daten (Fahrzeugdaten, Umweltdaten) von dem Eingangsmodul 28 erhält und einer vorbestimmten Berechnungsfunktion bzw. Berechnungsmatrix unterzieht, die nachfolgend genauer beschrieben wird unter Bezugnahme auf Figur 7. Die in Figur 6 gezeigte Auswerteeinheit 10 empfängt also Daten von dem Fahrzeugsensor 7 und den weiteren Sensoren 8 und erzeugt ein Wartungssignal 33 für das indirekte Sichtsystem 2, deren Einheiten 3, 4, 9 und/oder deren Teilkomponenten. Das Wartungssignal 33 wird von der Auswerteeinheit 10 über das Ausgangsmodul 31 ausgegeben. Gemäß dem bevorzugten Ausführungsbeispiel erfolgt die Ausgabe an das Diagnosegerät 11, an die Cloud 13, an die Wiedergabeeinheit 4 und/oder an die Handlungsempfehlungseinheit 12, die unter Bezugnahme auf Figur 8 beschrieben wird.

Figur 7 zeigt eine Berechnungsmatrix gemäß einem Ausführungsbeispiel der Erfindung, mittels der das Wartungssignal ermittelt wird, das die Restlebensdauer des indirekten Sichtsystems, einer seiner Einheiten und/oder deren Teilkomponenten angibt. Die Berechnungsmatrix wird erfindungsgemäß zur Berechnung des Einflusses verschiedener Umweltfaktoren in dem Wartungssystem, der Cloud und/oder dem externen Diagnosegerät abgespeichert. Hierbei entspricht die Dimension der Matrix der Anzahl der in Zusammenhang stehenden Umweltfaktoren. Die Einträge der Matrix entsprechen dem Einfluss auf die Lebensdauer einer betrachteten Komponente (mit Komponente ist das indirekte Sichtsystem als Ganzes, mindestens eine seiner oben genannten Einheiten und/oder mindestens eine derer Teilkomponenten gemeint). Über den konkret gemessenen Wert der Umweltfaktoren zu einer bestimmten Zeit wird auf einen spezifischen Matrixeintrag verwiesen, der dann zur Berechnung der Restlebensdauer verwendet wird bzw. die Einträge werden für verschiedene Zeitpunkte gespeichert und dann die Restlebensdauer der Komponenten aus den zu verschiedenen Zeiten abgespeicherten Matrixeinträgen berechnet. Darüber wird die mehrdimensionale Abhängigkeit verschiedener Umweltfaktoren abgebildet.

In fest vorgegebenen Zeitintervallen (beispielsweise jede Stunde) werden beispielsweise Temperatur (Umweltfaktor k), Feuchtigkeit (Umweltfaktor n) und UV-Belastung (Umweltfaktor m) in der Kamera über die dort implementierten weiteren Sensoren 8 gemessen. Über die gemessenen Werte wird auf ein Matrixelement M verwiesen. Dieses Matrixelement M wird dann zugehörig oder unabhängig zu dem Zeitintervall im System abgespeichert. Über die abgespeicherten Einträge wird dann konkret die Restlebensdauer einer Komponente berechnet. Hierbei haben beispielsweise hohe Werte von Temperatur und Feuchtigkeit im Zusammenspiel einen negativeren Wert als niedrige Werte. Eine hohe Temperatur in Kombination mit einer sehr niedrigen Feuchtigkeit kann dabei eine deutlich geringere Abnahme der Lebensdauer einer Komponente als eine mittlere Temperatur kombiniert mit einer hohen Feuchtigkeit zur Folge haben. Für die Messung kann auch die Luftfeuchtigkeit der Umgebung kombiniert mit einer Wahrscheinlichkeit von Undichtigkeiten innerhalb des optischen Pfades verwendet werden, die für ein Eintreten von Feuchtigkeit relevant sind.

Figur 8 zeigt schematisch die Handlungsempfehlungseinheit 12. Diese empfängt gemäß dem bevorzugten Ausführungsbeispiel der Erfindung das Wartungssignal 33 von der Auswerteeinheit 10 und gibt ein Handlungssignal 34 an die Wiedergabeeinheit 4, das Diagnosegerät 11 und/oder die Cloud 13 aus. Die Handlungsempfehlungseinheit 12 enthält erfindungsgemäß eine Datenbank 35, in der beispielsweise konkrete textbasierte Handlungsanweisungen gespeichert sind, die einen Benutzer des Wartungssystem darüber informieren, was zu tun ist. Die Datenbank enthält erfindungsgemäß beispielsweise eine linke Spalte, in der alle möglichen Wartungssignale gespeichert sind, und eine rechte Spalte, in der jeweils zugehörige Handlungen gespeichert sind. Gemäß dem bevorzugten Ausführungsbeispiel enthält die Handlungsempfehlungseinheit 12 ein Vergleichsmodul 36, das das Wartungssignal 33 empfängt, mit allen Daten in der linken Spalte der Datenbank 35 vergleicht und bei Übereinstimmung bzw. näherungsweiser Übereinstimmung die zugehörige Handlungsanweisung der rechten Spalte als Handlungssignal 34 ausgibt. Eine derartige Handlungsanweisung kann zum Beispiel sein: "Komponente austauschen", "Restlebensdauer beträgt 1 Jahr", "Komponente kann wiederverwendet werden", etc.

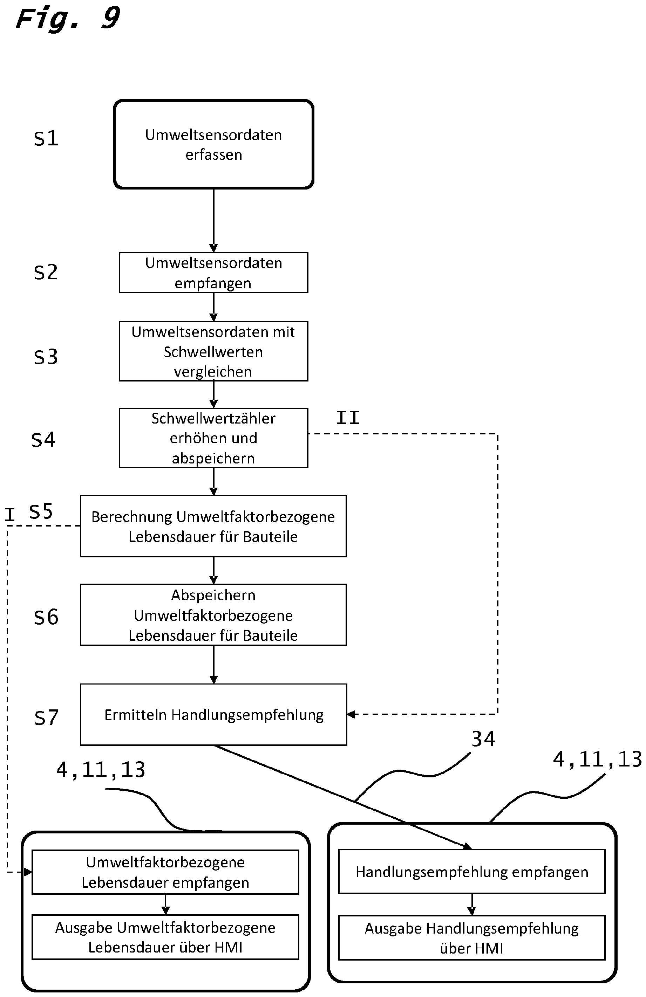

Figur 9 zeigt ein schematisches Ablaufdiagramm eines Verfahrens gemäß einem Ausführungsbeispiel der Erfindung. In Schritt S1 werden gemäß diesem Ausführungsbeispiel Umweltdaten von dem weiteren Sensor 8 erfasst und an die Empfangseinheit 6 weitergegeben. Diese gibt die Daten an die Auswerteeinheit 10, die in Schritt S2 die Daten empfängt. In Schritt S3 werden die Daten von der Vergleichseinheit 29 der Auswerteeinheit 10 mit einem Schwellenwert verglichen, und in Schritt S4 wird der Zähler 30 der Auswerteeinheit 10 um einen vorbestimmten Wert erhöht, wenn ein vorbestimmter Schwellenwert überschritten wird. Vorzugsweise muss der vorbestimmte Schwellenwert für eine vorbestimmte Zeitdauer überschritten werden, bevor der Zähler erhöht wird. Der vorbestimmte Wert, um den der Zähler erhöht wird, hängt vorzugsweise von der vorbestimmten Zeitdauer ab. In Schritt S4 wird der aktuelle Zählwert abgespeichert und basierend auf dem Zählwert in Schritt S5 das Wartungssignal erzeugt, das die umweltfaktorbezogene Lebensdauer der entsprechenden Komponente, der der Sensor 8 zugeordnet ist, angibt. In Schritt S6 wird das Wartungssignal für die Komponente entweder in der Komponente selbst und/oder in einem externen Speicher gespeichert.

In Schritt S7 wird ein Handlungssignal basierend auf dem in Schritt S5 erzeugten und in Schritt S6 gespeicherten Wartungssignal erzeugt und an die Wiedergabeeinheit 4, das Diagnosegerät 11 und/oder die Cloud 13 ausgegeben. Wie in Figur 9 gezeigt, wird das Handlungssignal 34 von der Wiedergabeeinheit 4, dem Diagnosegerät 11 und/oder der Cloud 13 empfangen und über eine Mensch-Maschine-Schnittstelle HMI dem Benutzer des Wartungssystems angezeigt.

Gemäß einem anderen Ausführungsbeispiel (I) der Erfindung kann das in Schritt S5 erzeugte Wartungssignal direkt an die Wiedergabeeinheit 4, das Diagnosegerät 11 und/oder die Cloud 13 ausgegeben werden. Da das Wartungssignal in Schritt S5 auf dem in Schritt S4 erhaltenen Zählwert basiert, ist dieser Zählwert ein Indikator für die verbleibende Restlebensdauer. Gemäß diesem Ausführungsbeispiel (I) muss der Benutzer selbst das Wartungssignal interpretieren, ohne dass ihm eine konkrete Handlungsempfehlung angezeigt wird. Gemäß einem noch anderen Ausführungsbeispiel (II), wie in Figur 9 gezeigt, kann der in Schritt S4 erhaltene Zählwert direkt in Schritt S7 weiterverarbeitet werden, um in Schritt S7 ein Handlungssignal 34 zu erzeugen. Dieses Handlungssignal 34 kann dann in ähnlicher Weise an die Wiedergabeeinheit 4, das Diagnosegerät 11 und/oder die Cloud 13 ausgegeben werden.

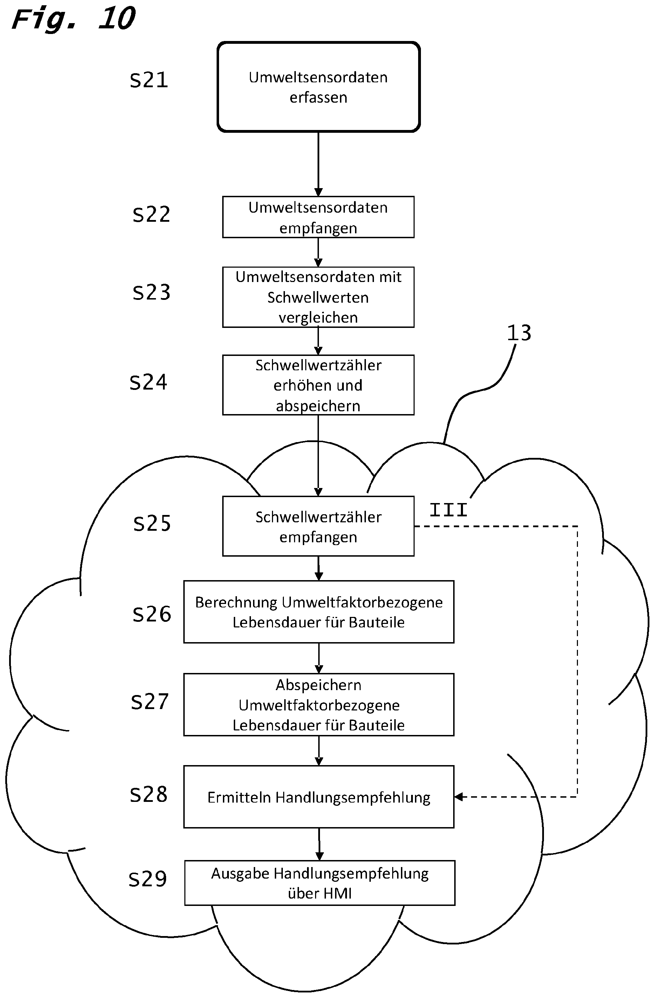

Figur 10 zeigt ein schematisches Ablaufdiagramm des erfindungsgemäßen Verfahrens gemäß einem alternativen Ausführungsbeispiel. Die Schritte S21 bis S24 in Figur 10 entsprechen den Schritten S1 bis S4 von Figur 9 und werden daher nicht wiederholt beschrieben.

Wie in Figur 10 gezeigt, wird der in Schritt S24 erhaltene Zählwert in die Cloud 13 übergeben, wo er in Schritt S15 empfangen wird. In Schritt S26 wird das Wartungssignal basierend auf dem erhaltenen Zählwert in der Cloud 13 erzeugt und in Schritt S27 gespeichert. Ähnlich wie in Figur 9 wird in Schritt S28 aus dem in S27 gespeicherten Wartungssignal ein Handlungssignal erzeugt und in Schritt S29 an eine Mensch-Maschine-Schnittstelle ausgegeben. Wie in Figur 10 gezeigt, werden gemäß diesem Ausführungsbeispiel die Schritte S25 bis S29 vollständig in der Cloud 13 durchgeführt. Ähnlich wie in dem Verfahren gemäß Figur 9 kann gemäß einem alternativen Ausführungsbeispiel (III) direkt aus dem Zählwert, der in Schritt S25 von der Cloud erhalten wird, ein Handlungssignal in Schritt S28 in der Cloud erzeugt werden, ohne dass ein Wartungssignal erzeugt und gespeichert wird.

### Bezugszeichenliste

| | | | |
|---|---|---|---|
| 1 | Fahrzeug | 27 | Speicher |
| 2 | indirektes Sichtsystem | 28 | Eingangsmodul |
| 3 | optische Sensoreinheit | 29 | Vergleichseinheit |
| 4 | Wiedergabeeinheit | 30 | Zähler |
| 5 | Fahrer | 31 | Ausgangsmodul |
| 6 | Empfangseinheit | 32 | Berechnungseinheit |
| 7 | Fahrzeugsensor | 33 | Wartungssignal |
| 8 | weiterer Sensor | 34 | Handlungssignal |
| 9 | Verarbeitungseinheit | 35 | Datenbank |
| 10 | Auswerteeinheit | 36 | Vergleichsmodul |
| 11 | Diagnosegerät | M | Matrixelement |
| 12 | Handlungsempfehlungseinheit | | |
| 13 | Cloud | | |
| 14 | Kameragehäuse | | |
| 15 | Kameraflügel | | |
| 16 | Linsensystem | | |
| 17 | Linsenheizung | | |
| 18 | Bildsensor | | |
| 19 | Verarbeitungsplatine | | |
| 20 | interner Speicher | | |
| 21 | Speicher | | |
| 22 | Platine | | |
| 23 | Gehäuse | | |
| 24 | Monitorhalterung | | |
| 25 | Platine | | |
| 26 | Anzeigebereich | | |

## Patentansprüche

1. Wartungssystem für ein indirektes Sichtsystem (2) eines Fahrzeugs (1), enthaltend:
das indirekte Sichtsystem (2) mit:
mindestens einer optischen Sensoreinheit (3) zum Erfassen von Bilddaten der Umgebung des Fahrzeugs,
mindestens einer Verarbeitungseinheit (9) zum Verarbeiten der von der optischen Sensoreinheit (3) erfassten Bilddaten, und
mindestens einer Wiedergabeeinheit (4), auf der die von der Verarbeitungseinheit (9) verarbeiteten Bilddaten angezeigt werden,
wobei mindestens eine aus der mindestens einen optischen Sensoreinheit (3), der mindestens einen Verarbeitungseinheit (9) und der mindestens einen Wiedergabeeinheit (4) mindestens eine Teilkomponente (16, 17, 18, 19, 23, 24, 26) enthält;
eine Empfangseinheit (6) zum Empfangen von Daten; und
eine Auswerteeinheit (10), die basierend auf den von der Empfangseinheit (6) empfangenen Daten ein Wartungssignal erzeugt, das angibt, wie lange und/oder ob die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.

2. Wartungssystem nach Anspruch 1, ferner enthaltend
mindestens einen Fahrzeugsensor (7), der Fahrzeugdaten an die Empfangseinheit (6) sendet, die für die Lebensdauer des Fahrzeugs (1), der mindestens einen Teilkomponente (16, 17, 18, 19, 23, 24, 26) und/oder der mindestens einen aus der mindestens einen optischen Sensoreinheit (3), der mindestens einen Verarbeitungseinheit (9) und der mindestens einen Wiedergabeeinheit (4), relevant sind, und/oder
mindestens einen weiteren Sensor (8), der Umweltdaten an die Empfangseinheit (6) sendet, die fahrzeugunabhängig sind und von Umweltfaktoren abhängen.

3. Wartungssystem nach Anspruch 2, bei dem die mindestens eine optische Sensoreinheit (3), die mindestens eine Verarbeitungseinheit (9), die mindestens eine Wiedergabeeinheit (4) und/oder die mindestens eine Teilkomponente (16, 17, 18, 19, 23, 24, 26) den mindestens einen weiteren Sensor (8) enthalten.

4. Wartungssystem nach Anspruch 2 oder 3, bei dem die Fahrzeugdaten Information enthalten über gefahrene Kilometer des Fahrzeugs, gefahrene Kilometer des Fahrzeugs bei Betrieb der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems, Betriebsdauer des Fahrzeugs, Betriebsdauer der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems bei Betrieb des Fahrzeugs, und/oder in Fahrzeugkomponenten aufgetretene Fehler, oder
bei dem die Umweltdaten Information enthalten über Temperatur, Luftfeuchtigkeit, Luftdruck, UV-Belastung, Staub, Feinstaub, und/oder mechanische Belastung, denen die mindestens eine Teilkomponente (16, 17, 18, 19, 23, 24, 26), die mindestens eine aus der optischen Sensoreinheit (3), der Verarbeitungseinheit (9) und der Wiedergabeeinheit (4) und/oder das gesamte indirekte Sichtsystem, ausgesetzt ist.

5. Wartungssystem nach einem der vorangegangenen Ansprüche, bei dem die Auswerteeinheit (10) ferner eine Berechnungseinheit (32) aufweist, die mindestens einen Teil der von der Empfangseinheit (6) empfangenen Fahrzeugdaten und/oder Umweltdaten von dem mindestens einen Fahrzeugsensor (7) und/oder dem mindestens einen weiteren Sensor (8) einer Berechnungsfunktion bzw. Berechnungsmatrix unterzieht und das Wartungssignal basierend auf dem berechneten Wert erzeugt, wobei die Berechnungsfunktion bzw. die Berechnungsmatrix mindestens einen Teil der empfangenen Fahrzeugdaten und/oder Umweltdaten als Funktionsparameter bzw. Matrixelement aufweist, und/oder
bei dem mehrere Wartungssignale verwendet und berechnet werden, und das resultierende Wartungssignal angibt, wie lange die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist, und/oder
bei dem die Auswerteeinheit (10) einen Zähler (30) und eine Vergleichseinheit (29) enthält, wobei die von der Empfangseinheit (6) empfangenen Daten und/oder berechneten Daten mit einem Schwellenwert verglichen werden und der Zähler (30) sich erhöht, wenn der Schwellenwert überschritten wird.

6. Wartungssystem nach Anspruch 5, bei dem die Auswerteeinheit (10) das Wartungssignal basierend auf dem Wert des Zählers (30) erzeugt.

7. Wartungssystem nach Anspruch 6, ferner enthaltend
eine Handlungsempfehlungseinheit (12), die das Wartungssignal von der Auswerteeinheit (10) empfängt, ein Handlungssignal basierend auf dem Wert des Zählers (30) erzeugt und zur Wiedergabe an die mindestens eine Wiedergabeeinheit (4), an ein Diagnosegerät (11) und/oder an eine Cloud (13) sendet.

8. Wartungssystem nach einem der vorangegangenen Ansprüche, bei dem das von der Auswerteeinheit (10) erzeugte Wartungssignal zur Wiedergabe an die mindestens eine Wiedergabeeinheit (4), an ein Diagnosegerät (11) und/oder an eine Cloud (13) gesendet wird, und/oder
ferner enthaltend
einen Speicher (20), der die von der Empfangseinheit (6) empfangenen Daten, die von der Berechnungseinheit (32) berechneten Daten, das Wartungssignal, das Handlungssignal und/oder den Schwellenwert speichert, und/oder
bei dem
die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem einen Speicher (20) enthält, in dem die in dem Wartungssignal enthaltene Information gespeichert wird, die angibt, wie lange und/ob die Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist, und/oder
bei dem die Empfangseinheit (6) und/oder die Auswerteeinheit (10) Teil des indirekten Sichtsystems (2) sind.

9. Verfahren zum Erzeugen eines Wartungssignals für ein indirektes Sichtsystem eines Fahrzeugs, mit mindestens einer optischen Sensoreinheit (3), mindestens einer Verarbeitungseinheit (9) und/oder mindestens einer Wiedergabeeinheit (4), mit den Schritten:
Empfangen von Daten; und
Erzeugen eines Wartungssignals basierend auf den empfangenen Daten, das angibt, wie lange mindestens eine Teilkomponente (16, 17, 18, 19, 23, 24, 26) von der mindestens einen optischen Sensoreinheit (3), der mindestens einen Verarbeitungseinheit (9) und/oder der mindestens einen Wiedergabeeinheit (4), und/oder die mindestens eine von der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.

10. Verfahren nach Anspruch 9, bei dem
die empfangenen Daten Fahrzeugdaten enthalten, die von mindestens einem Fahrzeugsensor (7) erfasst werden, und die für die Lebensdauer des Fahrzeugs (1), der mindestens einen Teilkomponente (16, 17, 18, 19, 23, 24, 26), der mindestens einen aus der mindestens einen optischen Sensoreinheit (3), der mindestens einen Verarbeitungseinheit (9) und der mindestens einen Wiedergabeeinheit (4) und/oder des indirekten Sichtsystems (2) relevant sind, und/oder
die empfangenen Daten Umweltdaten enthalten, die von mindestens einem weiteren Sensor (8) erhalten werden, und die fahrzeugunabhängig sind und von Umweltfaktoren abhängen.

11. Verfahren nach Anspruch 10, bei dem
die für die Fahrzeugdaten Information enthalten über gefahrene Kilometer des Fahrzeugs, gefahrene Kilometer des Fahrzeugs bei Betrieb der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems, Betriebsdauer des Fahrzeugs, Betriebsdauer der mindestens einen Teilkomponente (16, 17, 18, 19, 23, 24, 26), der mindestens einen aus der optischen Sensoreinheit (3), der Verarbeitungseinheit (9) und der Wiedergabeeinheit (4) und/oder des gesamten indirekten Sichtsystems bei Betrieb des Fahrzeugs, und/oder in Fahrzeugkomponenten aufgetretene Fehler, oder
bei dem
die Umweltdaten Information enthalten über Temperatur, Luftfeuchtigkeit, Luftdruck, UV-Belastung, Staub, Feinstaub, und/oder mechanische Belastung, denen die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und /oder das indirekte Sichtsystem ausgesetzt ist.

12. Verfahren nach Ansprüche 9 bis 11, ferner mit
Berechnen einen Funktionswerts, wobei die Berechnungsfunktion mindestens einen Teil der empfangenen Fahrzeugdaten und/oder der Umweltdaten als Parameter aufweist; und
Erzeugen des Wartungssignals basierend auf dem Funktionswert, und/oder ferner mit
Kombinieren von mehreren Wartungssignalen; und
Verwenden des resultierenden Wartungssignals, das angibt, wie lange die mindestens eine Teilkomponente (16, 17, 18, 19, 23, 24, 26), die mindestens eine aus der mindestens einen optischen Sensoreinheit (3), der mindestens einen Verarbeitungseinheit (9) und der mindestens einen Wiedergabeeinheit (4), und/oder das gesamte indirekte Sichtsystem noch verwendbar ist.

13. Verfahren nach Anspruch 12, ferner mit
Vergleichen der empfangenen Daten und/oder der berechneten Daten mit einem Schwellenwert; und
Erhöhen eines Zählers (30), wenn der Schwellenwert überschritten wird.

14. Verfahren nach Anspruch 13, ferner mit
Erzeugen des Wartungssignals basierend auf dem Wert des Zählers (30), und
Ausgeben des Wartungssignals an die mindestens eine Wiedergabeeinheit (4), an ein Diagnosegerät (11) und/oder an eine Cloud (13), und/oder
ferner mit
Erzeugen eines Handlungssignals basierend auf dem Wert des Zählers, und
Ausgeben des Handlungssignals an die mindestens eine Wiedergabeeinheit (4), ein Diagnosegerät (11) und/oder eine Cloud (13).

15. Verfahren nach einem der Ansprüche 9 bis 14, ferner mit
Speichern der empfangenen Daten, der berechneten Daten, des Schwellenwerts und/oder des Wartungssignals in mindestens der Teilkomponente (16, 17, 18, 19, 23, 24, 26), mindestens einer aus der mindestens einen optischen Sensoreinheit (3), der mindestens einen Verarbeitungseinheit (9) und der mindestens einen Wiedergabeeinheit (4), und/oder in dem indirekte Sichtsystem.
